# EUROPÄISCHE PATENTSCHRIFT

(11) **EP 3 670 293 B1**
(45) Veröffentlichungstag und Bekanntmachung des Hinweises auf die Patenterteilung: **10.08.2022**
(21) Anmeldenummer: 18214804.9
(22) Anmeldetag: 20.12.2018
(51) Int. Cl.: B62B 5/00, B62B 3/14, G01G 3/14, G01G 19/414

(54) **SYSTEM ZUM SELBST-CHECKOUT**
SYSTEM FOR SELF-CHECKOUT
SYSTÈME DE CONTRÔLE AUTOMATIQUE

(43) Veröffentlichungstag der Anmeldung: 24.06.2020
(73) Patentinhaber: Bizerba SE & Co. KG, 72336 Balingen (DE)
(72) Erfinder: Plocher, Thomas, 72172 Sulz am Neckar (DE); Andronic-Gorcea, Tudor, 9548 Matzingen (CH)
(74) Vertreter: Huber, Meik

(56) Entgegenhaltungen:
- WO-A1-00/73757
- DE-T5-112016 002 576
- DE-U1-202006 000 074
- US-A1- 2017 158 215

## Beschreibung

Die vorliegende Erfindung betrifft ein System zum Selbst-Checkout in einem Supermarkt. Das System besteht aus mehreren Einkaufswagen und einer Checkout-Vorrichtung. Die Checkout-Vorrichtung vergleicht von einem Einkaufswagen empfangene Gewichtsdaten mit erwarteten Gewichtsdaten und verifiziert den Einkauf. Die Erfindung betrifft ferner einen Einkaufswagen für ein System zum Selbst-Checkout.

Die DE 20 2006 000 074 U1 betrifft ein Geschäftssystem zum bedienerlosen Einkaufen und einen Einkaufswagen mit selbsttätiger Gewichtsermittlung. Der Einkaufswaagen umfasst mehrere balkenförmige Wägezellen, die sich einerseits auf einem Rahmen des Einkaufswagens abstützen und andererseits einen Korb des Einkaufswagens tragen. So wird das Gewicht der im Korb befindlichen Waren ermittelt. Im Vergleich zu einem herkömmlichen Einkaufswagen sind grundlegende Umbauten notwendig, um die Gewichtsermittlung der sich im Korb befindlichen Waren zu ermöglichen.

Die US2017/158215A1 zeigt einen Einkaufswagen zur Verwendung in Selbst-Checkout Anwendungen. Zwischen dem Rad des Einkaufswagens und dessen Rahmen ist eine Wägevorrichtung untergebracht, die ein gemessenes Gewicht an eine Computereinrichtung weitergibt. Aus den vier gemessenen Gewichtswerten an den vier Rädern wird das Gesamtgewicht des Einkaufswagens bestimmt.

Die DE 11 2016 002 576 T5 zeigt eine Wägevorrichtung zur Gewichtsbestimmung mit einem Lasteingabeabschnitt, der zylinderförmig ausgebildet ist, einem ringförmigen Verformungsabschnitt und einem zylinderförmig ausgebildeten Stützabschnitt.

Aufgabe der Erfindung ist es ein System zum Selbst-Checkout von Waren und einen Einkaufswagen dafür zu schaffen, der das Gewicht der sich im Korb des Einkaufswagens befindlichen Waren ermittelt und gleichzeitig nur wenige Änderungen am traditionellen Aufbau eines bekannten Einkaufswagens erfordert.

Diese Aufgabe wird durch einen Einkaufswagen nach Anspruch 1, und durch ein System zum Selbst-Checkout nach Anspruch 12 gelöst.

Erfindungsgemäß wird ein Einkaufswagen zum Selbst-Checkout von Waren in einem Ladengeschäft vorgeschlagen. Bei dem Ladengeschäft handelt es sich insbesondere um einen Supermarkt. Der Einkaufswagen umfasst einen Korb zur Aufnahme der Waren. Der Korb wird von einem Rahmen getragen. Der Rahmen stützt sich auf drei oder vier Rädern ab. Mindestens ein Rad, vorzugsweise alle Räder, sind über ein Halteblech mit einem Schwenklager verbunden. Das Schwenklager lagert das Rad drehbar in der Horizontalen. Die Ausrichtung der Räder ist durch das Schwenklager variabel, was eine Kurvenfahrt des Einkaufswagens ermöglicht. Zwischen dem Rahmen und den Rädern ist jeweils eine Wägezelle zur Gewichtsermittlung angeordnet. Das heißt, das Gewicht des Rahmens wird an jedem Rad gemessen. Jede Wägezelle misst ein Teilgewicht des gesamten Einkaufswagens. Die Wägezelle umfasst einen Federkörper mit einem äußeren Lagerring, einem inneren Krafteinleitungselement und einem ringförmigen Verformungsabschnitt, über den der Lagerring und das Krafteinleitungselement fest miteinander verbunden sind. Der Rahmen stützt sich auf den Krafteinleitungselementen der Wägezellen ab. Die Schwenklager oder die Haltebleche der Räder sind mit den äußeren Lagerringen mechanisch fest verbunden. Die Wägezelle umfasst einen Messumformer zur Erzeugung eines Ausgangssignals, welches einem auf das Krafteinleitungselement einwirkenden Gewicht entspricht. Der Messumformer ist elektrisch mit einer Schnittstelle verbunden. Die Schnittstelle ist dazu ausgebildet, das von dem Messumformer erzeugte Ausgangssignal über das Krafteinleitungselement an eine Schnittstelle im Rahmen auszugeben.

Durch die krafteinleitungsseitige Anordnung der Schnittstelle des Ausgangssignals ist es möglich, das Wägesignal direkt an den Rahmen des Einkaufswagens abzugeben, ohne dass der Rahmen über ein frei liegendes Kabel mit dem Lagerring verbunden werden müsste. In diesem Fall würde das Messergebnis durch einen Kraftnebenschluss des Kabels verfälscht. Mit der erfinderischen Anordnung können im Rahmen des Einkaufswagens alle Signale der Wägezellen zusammengeführt werden und ein Gewichtssignal des Einkaufswagens wird erzeugt. Das durch Summierung der einzelnen Wägezellen bestimmte Gewicht entspricht dem Gewicht des Einkaufswagens mit seinem Inhalt, jedoch ohne das Gewicht der Räder und des Schwenklagers. Um das Gewicht der im Korb abgelegten Waren zu bestimmen, wird das Taragewicht, also das Gewicht des Rahmens sowie aller am Rahmen befestigten Teile des Einkaufswagens, wie Korb, Griff, usw. vom ermittelten Gewicht abgezogen. Das Taragewicht des Einkaufswagens ist bei leerem Einkaufswagen mithilfe der Wägezellen bestimmbar.

In einer Ausführungsform ist durch die Analyse der Verteilung des Gewichts auf die Wägezellen und bei bekanntem Taragewicht durch eine Schwerpunktanalyse, wie zum Beispiel in der WO2018158274 gezeigt, möglich, zu bestimmen, ob ein Teil des Gewichtes durch ein Kind auf dem Kindersitz des Einkaufswagens verursacht wird. Das Gewicht des Kindes wirkt an einer horizontalen Stelle auf den Korb des Einkaufswagens, an der keine Waren abgelegt werden können. Wenn mittels Schwerpunktanalyse bei einer Veränderung des Gewichts auf den Wägezellen festgestellt wird, dass die Gewichtszunahme an einer Stelle ist, an der keine Waren abgelegt werden können, so ist klar, dass dies auf ein Kind auf dem Kindersitz zurückzuführen ist. Das Gewicht des Kindes wird dem Taragewicht zugerechnet, so dass nach Abzug des Taragewichtes nur das Gewicht der Waren im Einkaufswagen bestimmt wird. In einer Ausführungsform umfasst der Einkaufswagen an der vorderen Wand des Korbes einen Haken, um eine Tasche einzuhängen. Ebenfalls mittels Schwerpunktanalyse der Daten der Wägezellen ist es möglich festzustellen, ob Waren in der Tasche abgelegt werden. Wenn zum Beispiel ein System zum Selbst-Checkout eine optische Kontrolle des Wagens vorsieht, so wird eine Fehlermeldung erzeugt, falls Waren in der Tasche abgelegt werden, die an dem Einkaufswagen hängt, da diese Waren vom optischen Kontrollsystem nicht erfasst werden können. Mit dieser Fehlermeldung wird im System zum Selbst-Checkout eine manuelle Kontrolle durch einen Kassierer angewiesen.

In einer Ausführungsform umfasst der Lagerring auf seiner Außenseite ein Gewinde. Das Krafteinleitungselement ist rund ausgebildet und umfasst an seinem eingangsseitigen Ende ebenfalls ein Gewinde. Das Krafteinleitungselement ist mit dem Rahmen verschraubt. Der Lagerring ist mit einer Halterung des Schwenklagers oder des Haltebleches verschraubt. Vorzugsweise weisen beide Gewinde die gleiche Drehrichtung auf, so dass die Wägezelle zuerst mit dem Lagerring auf die Halterung des Schwenklagers oder des Haltebleches verschraubt wird und dann in den Rahmen geschraubt wird. Beim Verschrauben des Krafteinleitungselements im Rahmen kann dann die Kombination aus Rad und Wägezelle am Schwenklager oder am Halteblech gegriffen werden und gedreht werden. Beide Gewinde werden sodann bei gleicher Drehrichtung festgezogen. Das führt dazu, dass man nicht in den engen Spalt zwischen Rahmen und Schwenklager oder Halteblech fassen muss, um die Wägezelle zu verschrauben, sondern dass man durch eine Drehung am Schwenklager oder am Halteblech beide Schrauben der Wägezelle gleichzeitig anziehen kann. Somit ist die Wägezelle werkzeuglos montierbar.

Vorzugsweise handelt es sich bei der Schnittstelle um einen konzentrischen, also rotationssymmetrischen Stecker, dessen Steckerbuchse im Rahmen angeordnet ist. Der Steckverbinder kann beispielsweise als Klinkenstecker ausgebildet sein, so dass aufgrund dessen rotationssymmetrischer Ausbildung die Ausrichtung der Wägezelle in Drehrichtung relativ zu dem Rahmen keine Rolle spielt. So wird die Steckverbindung automatisch hergestellt, wenn die Wägezelle in die vorgesehene Öffnung im Rahmen geschraubt wird. Im Rahmen der Erfindung sind auch andere Stecker verwendbar, sodass der Stecker der Wägezelle über das Krafteinleitungselement ein Stück weit hinaussteht und der Stecker im Rahmen an einem Kabel aus dem Rahmen hängt. Dann kann die elektrische Verbindung zwischen Wägezelle und Rahmen hergestellt werden, und anschließend wird das Krafteinleitungselement in die vorgesehene Öffnung im Rahmen geschraubt. Durch eine ausreichende Länge des Kabels und eine entsprechend lose Führung des Kabels im Rahmen, kann sich das Kabel ein paarmal verdrehen, so dass sich die Drehung des Kabels durch das Verschrauben der Wägezelle nicht störend auswirkt. Durch die Schnittstelle ist die Wägezelle besonders einfach elektrisch mit dem Rahmen koppelbar. Grundsätzlich wäre es jedoch auch möglich, dass die Schnittstelle eine Hardware-Schnittstelle oder eine drahtlose Schnittstelle ist. Die drahtlose Schnittstelle kann als RF-ID Transmitter, insbesondere gemäß dem NFC-Standard, ausgebildet sein. Bei einer drahtlosen Schnittstelle erfolgt die Datenübertragung zwischen der Wägezelle und dem Rahmen kontaktlos. In diesem Fall kann die elektrische Ankopplung an den Rahmen vollständig ohne Montageaufwand bzw. automatisch erfolgen.

In einer Ausführungsform liegt der Lagerring in einer horizontalen Ebene. Das Krafteinleitungselement ist als ein vertikal orientiertes Krafteinleitungsrohr ausgebildet. Der Rahmen überträgt die jeweils an einem Rad wirkende Gewichtskraft auf das jeweilige Krafteinleitungsrohr. So ist sichergestellt, dass das Gewicht des Einkaufswagens rechtwinklig auf den Verformungsabschnitt wirkt. Eine Gewichtsbestimmung bei rechtwinklig wirkender Kraft ist am einfachsten möglich. Bei einer Abweichung von einer rechtwinklig einwirkenden Gewichtskraft müsste eine Korrektur der Gewichtsmessung um den jeweiligen Winkel vorgenommen werden, was die Komplexität des Messumformers deutlich erhöht. Aus diesem Grund ist in einer Ausführungsform ein Gravitationssensor im Einkaufswagen vorhanden, der vor der Gewichtsbestimmung überprüft, ob der Einkaufswagen auf einer Ebenen, horizontalen Unterlage steht und nicht vom Kunden in eine schräge Position angehoben wird.

Der Messumformer kann mehrere, insbesondere vier, auf dem Verformungsabschnitt angeordnete Dehnungsmessstreifen zur Erfassung einer streckenden und/oder stauchenden Verformung des Federkörpers und eine mit den Dehnungsmessstreifen elektrisch verbundene Auswerteschaltung umfassen, die dazu ausgebildet ist, das Ausgangssignal zu erzeugen. Üblicherweise sind die Dehnungsmessstreifen elektrisch zu einer Wheatstoneschen Messbrücke oder als Teil hiervon, insbesondere einer Vollbrücke, verschaltet. Dabei ist es bevorzugt, wenn die Auswerteschaltung an dem Krafteinleitungselement, insbesondere im Inneren eines als Krafteinleitungsrohr ausgebildeten Krafteinleitungselements, vorgesehen ist. Vorzugsweise sind die mehreren Dehnungsmessstreifen unterseitig auf dem Verformungsabschnitt angeordnet, insbesondere bei Verwendung eines Krafteinleitungsrohrs mit einer darin angeordneten Auswerteschaltung, da dann eine Bond-Draht-Verbindung zwischen den Dehnungsmessstreifen und der Auswerteschaltung ohne weiteres möglich ist. Alternativ kann der Messumformer einen Hall-Sensor umfassen, der dazu ausgebildet ist, mit einem Magnet zusammenzuwirken. Zwar ist die Genauigkeit eines Hall-Sensors kleiner als bei Verwendung von Dehnungsmessstreifen, jedoch ist ein Hall-Sensor im Vergleich zu Dehnungsmessstreifen kostengünstiger. Bevorzugt ist der Hall-Sensor an dem Krafteinleitungselement vorgesehen. Der Magnet kann dann unterhalb in der Halterung vorgesehen sein. Grundsätzlich kann die Anordnung auch umgekehrt sein, d.h. der Hall-Sensor ist an der Halterung angeordnet, und der Magnet ist an dem Krafteinleitungselement angeordnet. Bevorzugt ist der ringförmige Verformungsabschnitt als eine kreisringförmige Membran ausgebildet. Bei der Wägezelle handelt es sich dann um eine Membran-Wägezelle. Darüber hinaus kann die Membran oberseitig mit einem umlaufenden Ringsteg versehen sein. Die Dehnungsmessstreifen werden bevorzugt an einer Stelle angeordnet, an der bei einer Krafteinleitung eine möglichst starke Streckung bzw. Stauchung des Federkörpers auftritt, um ein möglichst hohes Signal zu erzeugen. Durch den umlaufenden Ringsteg kann die Breite der Stelle, an der die größte Streckung bzw. Stauchung des Federkörpers auftritt, vergrößert werden.

Wie bereits vorstehend erläutert kann das Krafteinleitungselement als ein Krafteinleitungsrohr ausgebildet sein, das insbesondere vertikal orientiert ist. Im Inneren des Krafteinleitungsrohrs können dann Mittel zur externen Ausgabe des Ausgangssignals angeordnet sein. Insbesondere kann das Innere des Krafteinleitungsrohrs eine Kabeldurchführung bilden. Darüber hinaus kann vorgesehen sein, dass die vorgenannte Auswerteschaltung des Messumformers und/oder ein elektrischer Energiespeicher für den Messumformer in dem Inneren des Krafteinleitungsrohrs angeordnet ist. Bei dem elektrischen Energiespeicher kann es sich beispielsweise um eine Batterie, insbesondere einen Akkumulator, handeln. Ein elektrischer Energiespeicher ist insbesondere bei einer kontaktlosen Datenübertragung zwischen der Wägezelle und dem Rahmen von Vorteil. Allerdings würde der Akkumulator mit einer Stromversorgung über einen Stecker verbunden, so dass der Stecker nicht entfallen kann, jedoch einfacher ausgebildet sein kann, da er nicht zur Datenübertragung benutzt wird.

Besonders bevorzugt ist es, wenn der Federkörper monolithisch, insbesondere als Drehteil, ausgebildet ist. Der Federkörper ist damit kein komplexes Bauteil aus mehreren Einzelteilen. Der Federkörper ist damit vergleichsweise einfach und kostengünstig herstellbar.

In einer Ausführungsform sind die Schnittstellen im Rahmen über eine Verkabelung mit einer Recheneinheit des Einkaufswagens verbunden. Die Recheneinheit bestimmt aus den drei oder vier Ausgangssignalen der Messumformer ein Gesamtgewicht des Einkaufswagens inklusive der darin abgelegten Waren und/oder ein Gesamtgewicht der im Korb abgelegten Waren. Das Gesamtgewicht des Einkaufswagens inklusive der darin abgelegten Waren ist so zu verstehen, dass es sich um die Teile des Einkaufswagens handelt, die vom Rahmen getragen werden. Das Gewicht der Räder und der Schwenklager, die unterhalb der Lagerringe der Wägezellen angeordnet sind, sind darin natürlich nicht enthalten.

In einer Ausführungsform umfasst der Einkaufswagen eine Kommunikationseinheit, die das Gewicht der im Korb abgelegten Waren an eine Empfängereinheit übermittelt.

Die Erfindung umfasst ferner ein System zum Selbst-Checkout von Waren in einem Ladengeschäft. Bei dem Ladengeschäft handelt es sich insbesondere um einen Supermarkt. Das System umfasst eine Vielzahl von erfindungsgemäßen Einkaufswagen. Das System umfasst ferner mindestens eine Checkout-Vorrichtung. Die Checkout-Vorrichtung umfasst mindestens eine Empfängereinheit, die dazu ausgebildet ist, Gewichtsdaten von einer Kommunikationseinheit eines Einkaufswagens zu empfangen. Die Checkout-Vorrichtung vergleicht die empfangen Gewichtsdaten mit erwarteten Gewichtsdaten. Falls die empfangenen Gewichtsdaten und die erwarteten Gewichtsdaten übereinstimmen, gibt die Checkout-Vorrichtung ein Freigabe Signal aus. Falls die empfangenen Gewichtsdaten und die erwarteten Gewichtsdaten nicht übereinstimmen, gibt die Checkout-Vorrichtung ein Nichtfreigabe Signal aus.

In einer Ausführungsform umfasst das System mobile Scanner zum Scannen eines maschinenlesbaren Codes. Der maschinenlesbare Code befindet sich auf Waren bzw. Verpackungen von Waren, die ein Kunde einkaufen möchte und zu diesem Zweck in einen Einkaufswagen legt. Der Scanner übermittelt nach dem Scannen eines maschinenlesbaren Codes den Code an eine zentrale Stelle. Die zentrale Stelle ermittelt ein erwartetes Gesamtgewicht von Waren, die in einem Zeitraum gescannt wurden, aufgrund der gescannten maschinenlesbaren Codes. Die zentrale Stelle übermittelt das erwartete Gesamtgewicht an die Checkout-Vorrichtung.

In einer Ausführungsform vergleicht die zentrale Stelle jede Gewichtsänderung, die einem maschinenlesbaren Code zuordenbar ist, mit einem Gewicht von einer zu dem maschinenlesbaren Code passenden Ware. Bei einer Abweichung, die größer als ein Grenzwert ist, wird eine Fehlermeldung erzeugt. Dadurch kann die zentrale Stelle erkennen, wenn ein Kunde einen Gegenstand, der zum Beispiel billiger ist, einscannt, und dafür einen anderen Gegenstand, der teurer ist, in den Einkaufswagen legt. Auch können fehlerhafte Erfassungen der Waren erkannt werden, wenn zum Beispiel zwei gleiche Waren durch einen Kunden in den Einkaufswagen gelegt werden, aber nur eine davon aus Versehen nur einmal gescannt wird. Des Weiteren wird so ebenfalls erkannt, wenn eine Ware gescannt wird, sich der Kunde aber dann entscheidet die Ware doch nicht in den Einkaufswagen zu legen, sondern ins Regal zurückzulegen. Zu diesem Zweck ist in einer Ausführungsform ein Timer in der zentralen Stelle vorhanden, der die zeitliche Abfolge zwischen Scannen der Ware und dem Ablegen in den Einkaufswagen erfasst.

In einer Ausführungsform ermittelt die zentrale Stelle eine Fehlfunktion eines Einkaufswagens, falls bei einem Großteil der eingescannten Waren eine Fehlermeldung erzeugt wird. Bei sehr häufig auftretenden Fehlern scheint es wahrscheinlich, dass nicht der Kunde dauerhaft Fehlbedienungen vornimmt, sondern vielmehr der Einkaufswagen defekt ist. Der Defekt kann im Bereich der Wägezelle auftreten, da diese selbst bei dem robusten Design gewissem mechanischen Stress ausgesetzt ist, nicht zuletzt wenn der Einkaufswagen sehr unsachgemäß gebraucht wird. Eine derartige Fehlfunktion wird von dem System erkannt. Die Wägezellen sind aufgrund der modularen Anordnung sehr einfach austauschbar. Die Wägezelle kann einfach vom Rahmen und dem Schenklager oder dem Halteblech abgeschraubt werden und eine neue Wägezelle kann an deren Stelle angeschraubt werden. Die Wägezellen selbst sind durch ihre mechanische Ausführung als einfaches Drehteil sehr kostengünstig herzustellen.

Einige Ausführungsformen der Erfindung sind in den Zeichnungen beispielhaft gezeigt und nachfolgend beschrieben. Es zeigen, jeweils in schematischer Darstellung:
- Fig. 1: einen Einkaufswagen nach dem Stand der Technik,
- Fig. 2: einen erfindungsgemäßen Einkaufswagen,
- Fig. 3: ein Rad mit Schwenklager und Wägeeinheit eines erfindungsgemäßen Einkaufswagens,
- Fig. 4: einen Schnitt durch eine Wägezelle im befestigten Zustand zwischen Rahmen und Rad,
- Fig. 5: eine Wägezelle für einen erfindungsgemäßen Einkaufswagen in einer perspektivischen Ansicht,
- Fig. 6: einen Federkörper im Querschnitt,
- Fig. 7: eine Teilansicht des Federkörpers aus Figur 6 bei einwirkender Gewichtsbelastung,
- Fig. 8: den Federkörper aus Figur 6 mit an der Unterseite angebrachten Dehnungsmessstreifen,
- Fig. 9: A und B: eine Ansicht von unten auf den Federkörper, wobei die Dehnungsmessstreifen eine erste Anordnung und eine zweite Anordnung aufweisen,
- Fig. 10: A und B: einen Federkörper, der oberseitig zusätzlich mit einem umlaufenden Ringsteg versehen ist,
- Fig. 11: A, B und C: einen Federkörper gemäß einer weiteren Ausführungsform mit einem Hall-Element in einer ersten, zweiten und dritten Anordnung, und
- Fig. 12: ein erfindungsgemäßes System zum Selbst-Checkout.

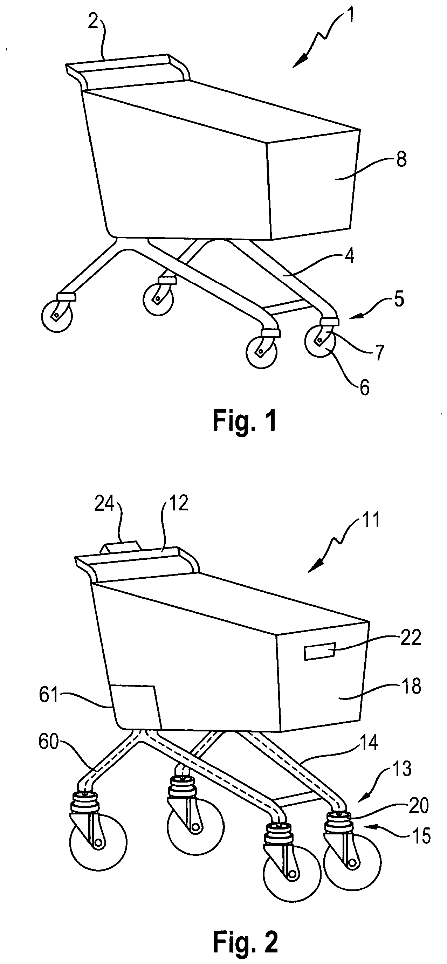

Figur 1 zeigt einen Einkaufswagen 1, wie er aus dem Stand der Technik bekannt ist. Ein Einkaufswagen 1 wird im Supermarkt zum Zusammenstellen von Waren und zu dessen Transport an die Kasse benutzt. Der Einkaufswagen 1 umfasst einen Korb 8 zur Aufnahme der Waren. Der Korb 8 ist auf einem Rahmen 4 abgestützt. Der Rahmen 4 ist derart ausgebildet, dass er vier in Richtung des Bodens zeigende Enden umfasst, an denen jeweils mittels eines in der Horizontalen drehbaren Schwenklagers 5 ein Halteblech 7 befestigt ist. Das Halteblech 7 trägt ein in vertikaler Richtung drehbar gelagertes Rad 6. Das Halteblech 7 dient als Radlauf für das Rad 6. An der Oberseite des Korbes 8 ist ein Griff 2 angebracht, mit dessen Hilfe der Einkaufwagen geschoben werden kann.

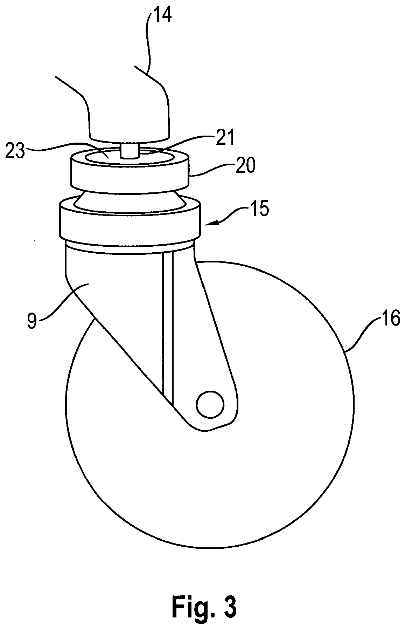

Figur 2 zeigt einen erfindungsgemäßen Einkaufswagen 11. Die Funktionalität des Einkaufswagens 11 ist derart erweitert, dass eine Gewichtsmessung des sich auf dem Rahmen 14 befindlichen Korbes 18 sowie die Weiterverarbeitung dieser Gewichtsdaten im Einkaufswagen 11 stattfinden kann. Somit ist der Einkaufswagen 11 zum Selbst-Checkout in einem Supermarkt geeignet. Der Einkaufswagen 11 umfasst einen Korb 18 zur Aufnahme von Waren. Der Korb 18 ist auf einem Rahmen 14 abgestützt. Der Rahmen 14 ist derart ausgebildet, dass er vier in Richtung des Bodens zeigende Enden umfasst, an denen eine Wägezelle 13 befestigt ist. Wie in Figur 3 in vergrößerter Ansicht gezeigt, ist die Wägezelle 13 in einer Halterung 20 aufgenommen, die ihrerseits mit einem in der Horizontalen drehbaren Schwenklager 15 verbunden ist. Die Wägezelle, die im Folgenden im Detail beschrieben ist, umfasst ein Krafteinleitungsrohr 21 und eine Membran 23, die zwischen Rahmen 14 und Halterung 20 eine Außenseite der Wägezelle 13 bilden. Ein Halteblech 9 ist am Schwenklager 15 befestigt, das ein in der Vertikalen drehbares Rad 16 trägt. Des Weiteren, wie in Figur 2 gezeigt, umfasst der Einkaufswagen 11 einen Griff 12, mit dessen Hilfe er geschoben werden kann. Innerhalb des Rahmens 14 ist ein Kabel 60 angebracht, das zu einer Rechnereinheit 61 führt und Wägedaten von den Wägezellen 13 zur Rechnereinheit 61 übermittelt. Die Rechnereinheit 61 umfasst ebenfalls einen Batteriespeicher. Außerdem umfasst der Einkaufswagen 11 eine Kommunikationseinheit 22 zum Austausch vom Daten mit einer Checkout-Vorrichtung und/oder zum Austausch von Daten mit einer zentralen Stelle im Supermarkt. Der Einkaufswagen 11 umfasst an seinem Griff 12 oder an einer anderen Stelle, die für den Bediener in ergonomischer Höhe ist, einen Scanner 24 zum Einscannen von Waren, die in den Korb 18 abgelegt werden. Der Scanner 24 scannt dabei einen Barcode oder einen QR Code einer Ware ein, die an den Scanner 24 gehalten wird. In einem Supermarkt muss nicht jeder Einkaufswagen 11 mit einem Scanner 24 ausgerüstet sein. Stattdessen kann ein System zum Selbst-Checkout in einem Supermarkt auch derart ausgeführt sein, dass ein Kunde sein Smartphone mit einer entsprechenden App als Scanner benutzt und die eingescannten Daten über eine drahtlose Kommunikationseinrichtung wie ein Mobilfunknetz, ein WLAN oder ähnliches an eine zentrale Stelle im Supermarkt schickt.

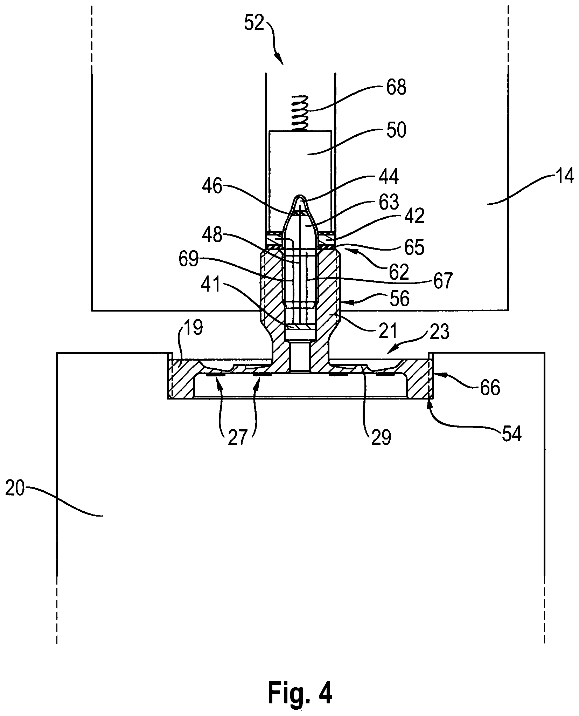

Figur 4 zeigt die Verbindung zwischen Rahmen 14 und Rad 16 eines erfindungsgemäßen Einkaufswagens 11 mit Hilfe einer Wägezelle 13. Die Wägezelle 13 ist dabei die einzige mechanische Verbindung zwischen Rahmen 14 und Rad 16. In der Halterung 20 für die Wägezelle 13 ist ein äußerer Lagerring 19 der Wägezelle 13 mithilfe eines Gewindes 66 verschraubt. Die Wägezelle 13 ist so tief in die Halterung 20 verschraubt, bis sie an einem Anschlag 54 anliegt. Somit bilden Halterung 20, äußerer Lagerring 19 und die Membran 23 einen Hohlraum, der gegen Umwelteinflüsse wie Wasser abgeschlossen ist. Zugang in den Hohlraum ist nur durch das Krafteinleitungsrohr 21 möglich, durch welches auch die Signalleitungen der Dehnungsmesstreifen 27 geführt werden. Die Dehnungsmessstreifen 27 befinden sich auf der Unterseite der Membran 23 in dem Hohlraum. Im Krafteinleitungsrohr 21 befindet sich eine Auswerteschaltung 41 für die Signale der Dehnungsmessstreifen 27. Die Auswerteschaltung 41 ist über elektrische Leitungen 67, 48, 69 mit einem Stecker 43 verbunden. Der Stecker 43 besteht aus einem Kontakt 42 für die Versorgungsspannung, der über eine elektrische Leitung 49 mit der Auswerteschaltung 41 verbunden ist. Der Stecker umfasst ferner einen Massekontakt 63, der über eine elektrische Leitung 67 mit der Auswerteschaltung 41 verbunden ist. Der Stecker 43 umfasst ferner einen Signalkontakt 44, der über eine elektrische Leitung 48 mit der Auswerteschaltung verbunden ist. Isolatoren 46, 65 trennen die einzelnen Potentiale voneinander. Das Krafteinleitungsrohr umfasst ebenfalls ein Gewinde 56, mit dem es in eine entsprechende Öffnung im Rahmen 14 bis zu einem Anschlag 62 geschraubt wird. Beim Verschrauben des Krafteinleitungsrohrs 21 in den Rahmen 14 dringt der Stecker in eine Steckerbuchse 50 ein, die mit einer Feder 68 gegen den Stecker geführt wird und in einem entsprechenden Hohlraum 52 im Rahmen geführt wird. Die Steckerbuchse 50 ist mit dem Kabel 60 verbunden und stellt die Verbindung zur Rechnereinheit 61 her. Bei einem konzentrischen Stecker, zum Beispiel einem Klinkenstecker, wird der Kontakt automatisch beim Einschrauben des Krafteinleitungsrohrs hergestellt. Natürlich kann auch ein nicht konzentrisch ausgebildeter Stecker benutzt werden, der an einem Kabel aus dem Rahmen 14 heraushängt. Stecker und Steckerbuchse werden dann zusammengesteckt und das Krafteinleitungsrohr wird im Rahmen verschraubt. Das Kabel verdreht sich dann um ein paar Umdrehungen innerhalb des Hohlraums 52, was die Funktionalität jedoch nicht beeinflusst. Ist das Gewinde 66 auf der Außenseite des äußeren Lagerrings 19 und das Gewinde 56 auf der Außenseite des Krafteinleitungsrohrs 21 drehgleich, so können beide mit einer Drehrichtung der Halterung 20 relativ zum Rahmen 14 gegen die Anschläge 62, 54 festgezogen werden.

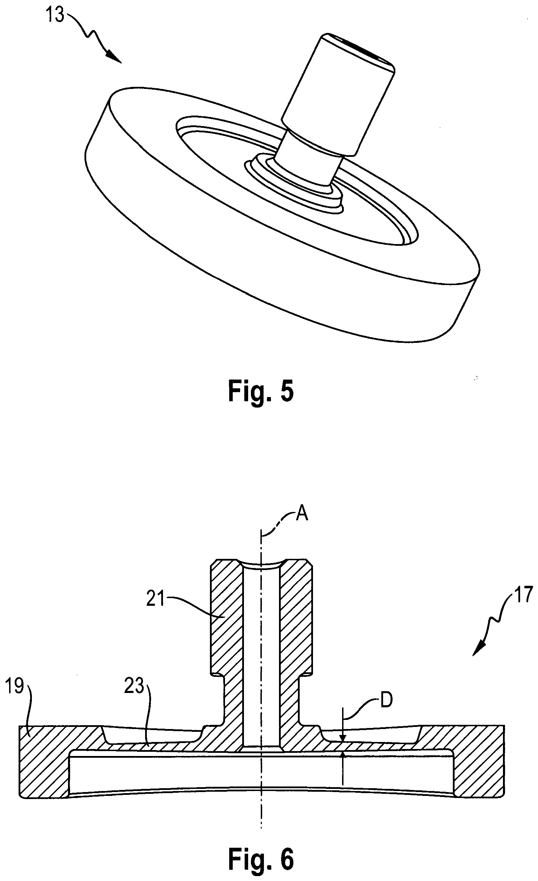

In der Figur 5 ist die 3D Ansicht einer Wägezelle 13 dargestellt, die zwischen Rahmen 14 und Rad in einem Einkaufswagen 11 verbaut ist. Die Wägezelle 13 umfasst einen monolithisch und um eine Mittelachse A rotationssymmetrisch ausgebildeten Federkörper 17 (vgl. Figur 6). Der Federkörper 17 umfasst einen äußeren Lagerring 19 und ein inneres Krafteinleitungselement 21. Der äußere Lagerring 19 und das innere Krafteinleitungselement 21 sind über einen ringförmigen Verformungsabschnitt 23 fest miteinander verbunden.

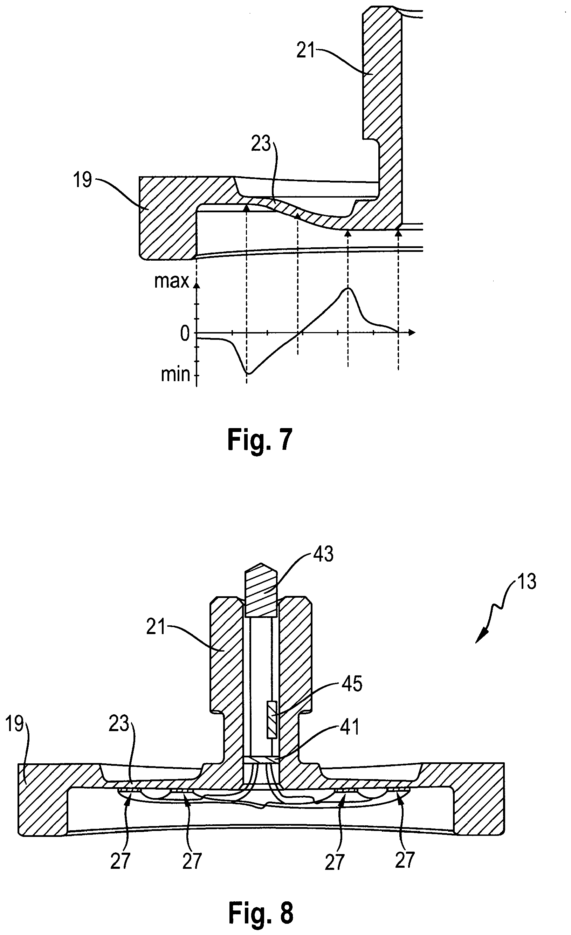

Der ringförmige Verformungsabschnitt 23 ist als eine kreisringförmige Membran 23 ausgebildet. Das innere Krafteinleitungselement 21 ist als ein vertikal orientiertes Krafteinleitungsrohr 21 ausgebildet, an dessen oberen Ende ein Außengewinde 56 vorgesehen ist, über das die Wägezelle 13 von unten in den Rahmen 14 des Einkaufswagens 11 eingeschraubt werden kann. Wirkt über das Krafteinleitungsrohr 21 eine Gewichtskraft auf den Federkörper 17 ein, bewegt sich das Krafteinleitungsrohr 21, insbesondere relativ zu dem feststehenden äußeren Lagerring 19, geringfügig vertikal nach unten, wobei sich die Membran 23 des Federkörpers 17 in der in Figur 7 gezeigten Art verformt. In der unteren Hälfte der Figur 7 ist ein Diagramm dargestellt, das die Dehnungsverteilung des Federkörpers 17, d.h. die Dehnung des Federkörpers 17 abhängig von der jeweiligen radialen Position, zeigt. Wie sich aus diesem Diagramm anhand des dargestellten Maximums bzw. Minimums der die Dehnungsverteilung darstellenden Kurve ergibt, erfährt die Unterseite des Federkörpers 17 bei Belastung im Bereich des Übergangs zu dem Krafteinleitungsrohr 21 eine Streckung (positive Dehnung) und im Bereich des Übergangs zu dem äußeren Lagerring 19 eine Stauchung (negative Dehnung). Zwischen dem Maximum und dem Minimum besitzt die dargestellte Kurve eine Nullstelle.

Diese Verformung des Federkörpers 17 kann über vier, auf die Unterseite der Membran 23 aufgebrachte, insbesondere in den beiden vorgenannten Bereichen angeordnete, Dehnungsmessstreifen 27, deren elektrischer Widerstand sich in Abhängigkeit von der Dehnung ändert, detektiert werden (vgl. Figur 8), wobei auf zwei einander gegenüberliegenden Seiten des Krafteinleitungsrohrs 21 jeweils zwei Dehnungsmessstreifen 27 angeordnet sind. Wie sich aus einem Vergleich mit Figur 7 ergibt, handelt es sich bei den beiden innen liegenden Dehnungsmessstreifen 27 um zugbeanspruchte Dehnungsmessstreifen, die eine Streckung der Membran 23 erfassen, und bei den beiden außenliegenden Dehnungsmessstreifen 27 um druckbeanspruchte Dehnungsmessstreifen, die eine Stauchung der Membran 27 erfassen.

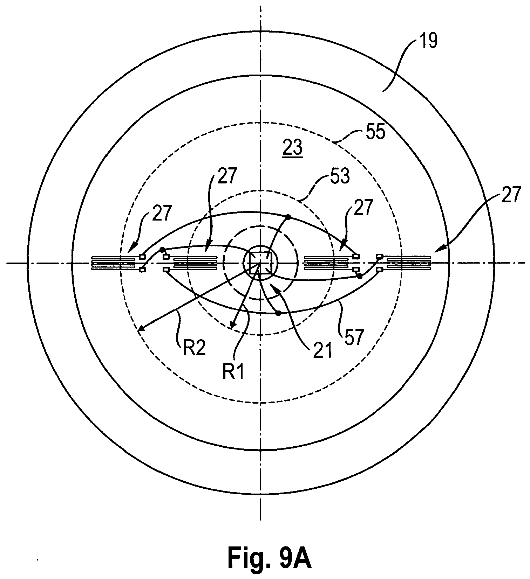

Wie in Figur 9A näher dargestellt ist, sind die vier Dehnungsmessstreifen 27 über Bond-Drähte 57 (von denen der Übersichtlichkeit halber lediglich einer mit einem Bezugszeichen versehen ist) elektrisch zu einer Wheatstoneschen Vollbrücke verschaltet, wobei die Messgitter der Dehnungsmessstreifen 27 jeweils in radialer Richtung orientiert sind, d.h. die Messrichtung der Dehnungsmessstreifen 27 liegt jeweils in radialer Richtung. Die beiden inneren, zugbeanspruchten Dehnungsmessstreifen 27 liegen auf einem ersten Kreis 53 mit einem ersten Radius R1, und die beiden äußeren, druckbeanspruchten Dehnungsmessstreifen 27 liegen auf einem zweiten Kreis 55 mit einem größerem zweiten Radius R2. Die vier Dehnungsmessstreifen 27 sind dabei entlang einer gemeinsamen Linie durch die Mittelachse A des Federkörpers 17 angeordnet. Durch die Linienanordnung der Dehnungsmessstreifen 27 und die hiermit verbundene Symmetrie kann die Fertigungstoleranz erhöht werden, da sich dann zumindest bestimmte Fertigungsabweichungen gegenseitig ausgleichen können.

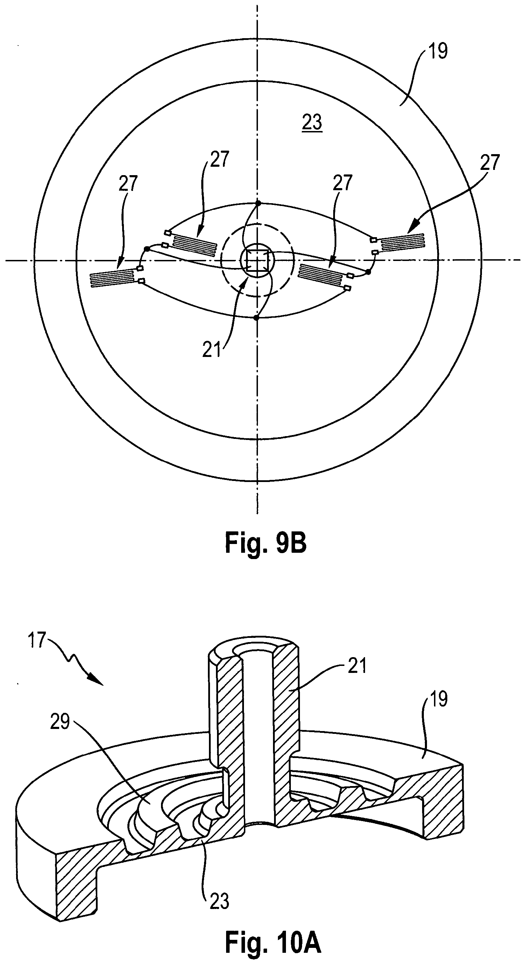

Aus Figur 9B ist ersichtlich, dass die Dehnungsmessstreifen 27 auch geringfügig von der Linienanordnung gemäß Figur 9A abweichend platziert werden können, insbesondere derart, dass die beiden inneren Dehnungsmessstreifen 27 entlang einer ersten Linie und die beiden äußeren Dehnungsmessstreifen 27 entlang einer zweiten Linie durch die Mittelachse A des Federkörpers 17 angeordnet sind, wobei die beiden Linien geringfügig gegeneinander verdreht sind. Hierdurch wird ermöglicht, den radialen Abstand der beiden auf einer Seite nebeneinander angeordneten Dehnungsmessstreifen 27 zu verringern, so dass ein Federkörper 17 mit geringerem Durchmesser gewählt werden kann, wodurch die Wägezelle 13 kompakter gestaltet werden kann. Der im Zusammenhang mit der Linienanordnung gemäß Figur 9A genannte Vorteil der höheren Fertigungstoleranz bleibt dabei, d.h. bei geringfügig abweichender Platzierung, großteils erhalten. Wie insbesondere aus der Figur 6 erkennbar ist, ist die Dicke D der kreisringförmigen Membran 23 im Bereich des kleineren ersten Radius R1, d.h. bei den beiden inneren Dehnungsmessstreifen 27, größer ist als im Bereich des zweiten Radius R2, d.h. den beiden äußeren Dehnungsmessstreifen 27. Hierdurch wird ermöglicht, dass in beiden Bereichen betragsmäßig gleiche bzw. zumindest ähnliche Dehnungen erhalten werden, so dass die Widerstands-/Belastungskennlinien der beiden inneren Dehnungsmesstreifen 27 einerseits und die Widerstands-/Belastungskennlinien der beiden äußeren Dehnungsmessstreifen 27 andererseits - trotz unterschiedlicher Radien - betragsmäßig einander zumindest im Wesentlichen entsprechen. Hierdurch wird die Auswertung der Brückenspannung der Brückenschaltung erleichtert und die Genauigkeit der Wägezelle 13 erhöht.

Die größere Dicke der Membran 23 weiter innen im Vergleich zu weiter außen lässt sich durch die Verhältnisse aus Flächenträgheitsmoment und Abstand des jeweiligen Bereichs zu der Krafteinleitung begründen. Veranschaulicht bzw. vereinfacht formuliert ist im Bereich des größeren zweiten Radius R2 aufgrund des größeren Umfangs eine geringe Dicke erforderlich, um auf dasselbe Materialvolumen und damit ein analoges Dehnungsverhalten zu kommen wie im Bereich des kleineren ersten Radius R2 mit dem kleineren Umfang.

Gemäß der dargestellten Ausführungsform nimmt die Dicke der Membran 23 von innen nach außen monoton ab, insbesondere linear ab. Eine derartige Membran 23 ist besonders einfach herstellbar. Grundsätzlich sind jedoch auch andere Übergänge von der größeren inneren Dicke zu der geringeren äußeren Dicke denkbar, beispielsweise eine stufenförmige Abnahme. Die Dehnungsmessstreifen 27 sind elektrisch mit einer Auswerteschaltung 41 verbunden (vgl. Figur 8), die in an sich bekannter Weise aus der Brückenspannung der zu der Vollbrücke verschalteten Dehnungsmessstreifen 27 das auf die Wägezelle 13 jeweils einwirkende Gewicht berechnet und ein entsprechendes Ausgangssignal erzeugt. Die Dehnungsmessstreifen 27 bilden daher zusammen mit der Auswerteschaltung 41 einen Messumformer im Sinne der vorliegenden Anmeldung.

Die Auswerteschaltung 41 ist dabei innerhalb des Krafteinleitungsrohrs 21 angeordnet. Wie in Figur 8 dargestellt ist, kann das Ausgangssignal der Auswerteschaltung 41 beispielsweise über einen Stecker 43, der mit der Auswertschaltung 41 elektrisch verbunden ist, in den Rahmen 14 des Einkaufswagens 11, wie er vorstehend und nachstehend beschrieben ist, ausgegeben werden. Der Stecker 43 ist dabei innerhalb des Krafteinleitungsrohrs 21 angeordnet. Wenn die Wägezelle 13 über das Krafteinleitungsrohr 21 bzw. dessen Außengewinde von unten in den Rahmen 14 des Einkaufswagens 11 eingeschraubt ist, hat dies den Vorteil, dass das Ausgangssignal unmittelbar und auf kürzestem Weg an den Einkaufswagen 11 bzw. die Rechnereinheit 61 des Einkaufswagens 11 ausgegeben werden kann, ohne dass hierfür zusätzlich externe Kabel oder dergleichen erforderlich sind, wie dies der Fall wäre, wenn das Ausgangssignal lagerringseitig an den Einkaufswagen 11 ausgegeben werden würde. Als weiteres Mittel zur Ausgabe des Ausgangssignals kommen im Übrigen auch andere Schnittstellen, insbesondere kontaktlose Mittel wie etwa ein Transmitter, der beispielsweise auf dem NFC-Standard basieren kann, in Frage. Insbesondere bei einer kontaktlosen Ausbildung der Schnittstelle zwischen Wägezelle 13 und Rahmen 14 des Einkaufswagens 11 kann vorgesehen sein, dass ein interner elektrischer Energiespeicher 45 wie z.B. eine Batterie vorgesehen ist, um die Wägezelle 13 unabhängig von einer externen Energieversorgung, d.h. autark, auszubilden. Der elektrische Energiespeicher 45 ist bevorzugt dann ebenfalls innerhalb des Krafteinleitungsrohrs 21 angeordnet.

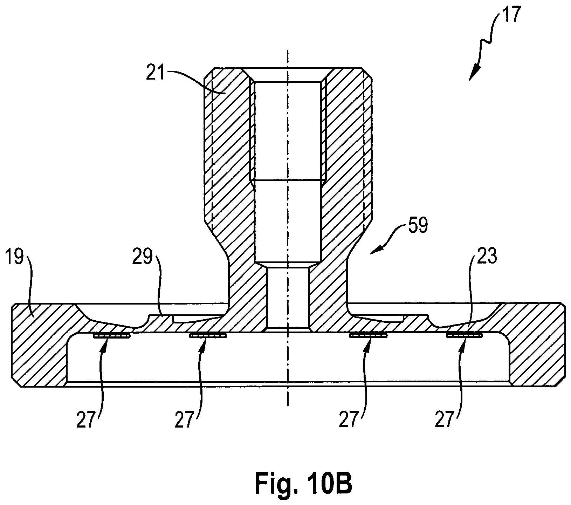

In Figur 10A ist eine weitere Ausführungsform eines Federkörpers 17 dargestellt. Gegenüber dem Federkörper 17 gemäß den Figuren 5 bis 8 ist die Membran 23 des Federkörpers 17 gemäß Figur 10 an ihrer Oberseite mit einem umlaufenden Ringsteg 29 versehen, der in radialer Richtung zumindest im Wesentlichen mittig der Membran 23 angeordnet ist. Es hat sich herausgestellt, dass hierdurch die Breite des Maximums und die Breite des Minimums der in Figur 7 dargestellten Dehnungsverteilung des Federkörpers 17 vergrößert werden kann. Die Fertigungstoleranz kann dadurch erhöht werden. Darüber hinaus hat sich herausgestellt, dass es insbesondere bei Vorhandensein des Ringstegs 29 vorteilhaft sein kann, wenn die beiden inneren Dehnungsmessstreifen 27 mit dem inneren Krafteinleitungsrohr 21 und die beiden äußeren Dehnungsmessstreifen 27 mit dem äußeren Lagerring 19 überlappend angeordnet sind, um möglichst lineare Abhängigkeiten der relativen Widerstandsänderungen von der Dehnung zu erhalten, um die Genauigkeit der Wägezelle 13 zu erhöhen.

In Figur 10B ist ein weiterer Federkörper 17 in etwas anderer Ausführung dargestellt. Der Federkörper 17 gemäß Figur 10B unterscheidet sich von den Federkörpern 17 gemäß Figur 10A und Figur 6 dadurch, dass die Dicke der Membran 23 im Bereich der beiden inneren Dehnungsmessstreifen 27 von innen nach außen abnimmt und im Bereich der beiden äußeren Dehnungsmessstreifen 27 von innen nach außen zunimmt. Die mittlere Dicke D der Membran 23 im Bereich der beiden inneren Dehnungsmessstreifen 27 ist dabei aber weiterhin - und damit erfindungsgemäß - größer als die mittlere Dicke D der Membran 23 im Bereich der beiden äußeren Dehnungsmessstreifen 27. Darüber hinaus ist der umlaufende Ringsteg 29 im Unterschied zu der Ausführungsform gemäß Figur 10A weniger hoch ausgebildet. An ihrer Oberseite weist die kreisringförmige Membran 23 in ihrem Übergangsbereich zu dem äußeren Lagerring 19 und in ihrem Übergangsbereich zu dem inneren Krafteinleitungselement 21 jeweils einen gerundeten Verlauf auf. Der gerundete Verlauf ist in den Federkörpern nach den Ausführungsformen nach Figur 10A und Figur 6 ebenfalls vorhanden, jedoch nicht so stark ausgeprägt. Darüber hinaus weist das innere Krafteinleitungselement 21, also das Krafteinleitungsrohr 21, wie auch in den Ausführungsformen nach Figur 10A und Figur 6, an seinem unteren Ende einen Hinterschnitt 59 auf, so dass die Krafteinleitung möglichst nahe an der Mittelachse A des Federkörpers 17 erfolgt. Hierdurch kann die Genauigkeit der Wägezelle 13 jeweils deutlich weiter verbessert werden.

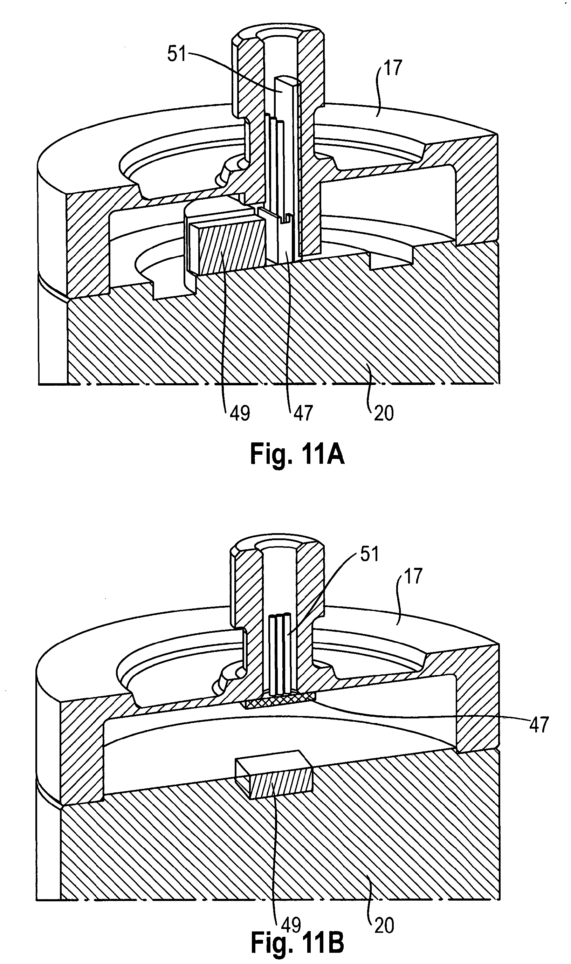

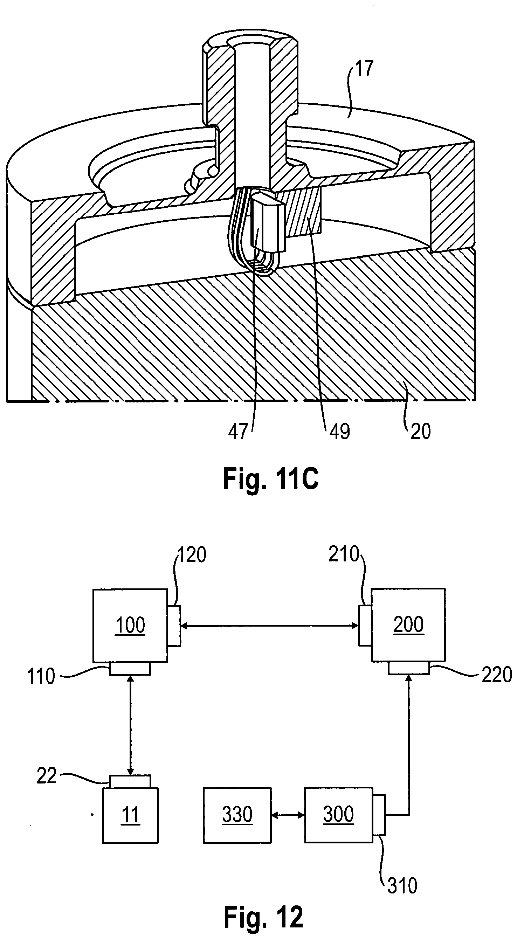

In den Figur 11A bis 11C ist gezeigt, dass anstelle eines Messumformers, der auf Dehnungsmessstreifen und einer zugehörigen Auswerteschaltung basiert, auch ein auf einem Hall-Sensor 47 basierender Messumformer eingesetzt werden kann. Gemäß Figur 11A kann der Hall-Sensor 47 samt einer Verkabelung 51 hierzu an dem Krafteinleitungsrohr 21 vorgesehen sein, und ein Magnet 49, dessen Magnetfeld von dem Hall-Sensor 47 detektiert wird, kann auf der Halterung 20, gegenüber dem sich das Krafteinleitungsrohr 21 bei Krafteinwirkung bewegt, angebracht sein. Aus der durch die Relativbewegung zwischen Hall-Sensor 47 und Magnet 49 bedingten Änderung des von dem Hall-Sensor 47 detektierten Magnetfelds kann das auf das Krafteinleitungsrohr 21 einwirkende Gewicht berechnet werden. Die Anordnung kann dabei beispielsweise derart gewählt sein, dass Hall-Sensor 47 und Magnet 49 nebeneinander angeordnet sind. Darüber hinaus ist es auch möglich, dass der Magnet 49 in der Halterung 20 eingebettet ist und/oder dass Hall-Sensor 47 und Magnet 49 übereinander angeordnet sind (vgl. Figur 11B). Darüber hinaus ist es grundsätzlich auch denkbar, dass der Hall-Sensor 47 an der Halterung und der Magnet 49 an dem Krafteinleitungsrohr 21 angebracht ist, wie es in Fig. 11C gezeigt ist.

Figur 12 zeigt ein erfindungsgemäßes System zum Selbst-Checkout. Das System umfasst mehrere Einkaufswagen 11. Ein Kunde, der seine Einkäufe zusammenstellt, fährt mit dem Einkaufswagen durch den Supermarkt und stellt seine Waren 330 zusammen. Bevor er die Waren 330 in den Einkaufswagen 11 ablegt, scannt er mit einem Scanner 300 die Waren 330 ein. Der Scanner 300 ist in einer Ausführungsform ein Smartphone mit einer entsprechenden App. Der Scanner 300 hat eine Kommunikationsschnittstelle 310, mit der der Scanner 300 die eingescannte Wareninformation an eine Empfängereinheit 220 einer zentralen Stelle 200 sendet. Die zentrale Stelle 200 verbindet die Wareninformation mit einer zugehörigen Gewichtsinformation und bestimmt ein Gesamtgewicht aller Waren, die der Kunde eingescannt hat. Beim Checkout bringt der Kunde den Einkaufswagen 11 zur Checkout-Vorrichtung 100. Die Checkout-Vorrichtung 100 umfasst eine Empfängereinheit 110 um Gewichtdaten von der Kommunikationseinheit 22 des Einkaufswagens 11 auszulesen. Diese Gewichtsdaten werden von der Checkout-Vorrichtung 100 über eine Sender/Empfängereinheit 120 an eine Sende/Empfängereinheit 210 der zentralen Stelle 200 übermittelt. Die zentrale Stelle 200 verifiziert die Gewichtsdaten und die Liste der Waren und schickt je nach Verifikationsergebnis ein Freigabe Signal oder ein Nichtfreigabe Signal an die Checkout-Vorrichtung 100.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Einkaufswagen (11) zum Selbst-Checkout von Waren in einem Ladengeschäft, insbesondere in einem Supermarkt, mit einem Korb (18) zur Aufnahme der Waren und einem Rahmen (14), der den Korb (18) trägt, wobei sich der Rahmen (14) auf drei oder vier Rädern (16) abstützt, wobei mindestens ein Rad (16) über ein Halteblech (9) mit einem Schwenklager (15) verbunden ist, welches das Rad (16) in der Horizontalen drehbar lagert, wobei zwischen Rahmen (14) und Rad (16) jeweils eine Wägezelle mit einem Krafteinleitungselement angeordnet ist, wobei die Wägezelle einen Messumformer (27, 41; 47) zur Erzeugung eines einem auf das Krafteinleitungselement (21) einwirkenden Gewicht entsprechenden Ausgangssignals umfasst, **dadurch gekennzeichnet, dass** die Wägezelle (13) einen Federkörper (17) mit einem äußeren Lagerring (19), einem inneren Krafteinleitungselement (21) und einem ringförmigen Verformungsabschnitt (23), über den der Lagerring (19) und das Krafteinleitungselement (21) fest miteinander verbunden sind, umfasst, und wobei sich der Rahmen (14) auf den Krafteinleitungselementen (21) der Wägezellen (13) abstützt, und dass das Schwenklager (15) oder das Halteblech (9) der Räder (16) mit den Lagerringen (19) mechanisch fest verbunden sind, und dass der Messumformer (27, 41; 47) elektrisch mit einer Schnittstelle (43) verbunden ist, die dazu ausgebildet ist, das von dem Messumformer (27, 41; 47) erzeugte Ausgangssignal über das Krafteinleitungselement an eine Schnittstelle im Rahmen (14) auszugeben.

2. Einkaufswagen nach Anspruch 1, **dadurch gekennzeichnet, dass** der Lagerring in einer horizontalen Ebene liegt und das Krafteinleitungselement als ein vertikal orientiertes Krafteinleitungsrohr ausgebildet ist, und dass der Rahmen die jeweils an einem Rad wirkende Gewichtskraft auf das jeweilige Krafteinleitungsrohr überträgt.

3. Einkaufswagen nach Anspruch 1 oder 2, **dadurch gekennzeichnet, dass** der Messumformer (27, 41) mehrere auf dem Verformungsabschnitt (23) angeordnete, elektrisch zu einer Wheatstoneschen Messbrücke oder als Teil hiervon verschaltete Dehnungsmessstreifen (27) zur Erfassung einer streckenden und/oder stauchenden Verformung des Federkörpers (17) und eine mit den Dehnungsmessstreifen (27) elektrisch verbundene Auswerteschaltung (41) umfasst, die dazu ausgebildet ist, das Ausgangssignal zu erzeugen, wobei bevorzugt die Auswerteschaltung (41) an dem Krafteinleitungselement (21) vorgesehen ist.

4. Einkaufswagen nach Anspruch 3, **dadurch gekennzeichnet, dass** die mehreren Dehnungsmessstreifen (27) unterseitig auf dem Verformungsabschnitt (23) angeordnet sind.

5. Einkaufswagen nach einem der Ansprüche 1 bis 4, **dadurch gekennzeichnet, dass** der Messumformer (47) einen Hall-Sensor (47) umfasst, der dazu ausgebildet ist, mit einem Magnet (49) zusammenzuwirken, wobei bevorzugt der Hall-Sensor (47) an dem Krafteinleitungselement (21) vorgesehen ist.

6. Einkaufswagen nach einem der Ansprüche 1 bis 5, **dadurch gekennzeichnet, dass** der ringförmige Verformungsabschnitt (23) als eine kreisringförmige Membran (23) ausgebildet ist.

7. Einkaufswagen nach Anspruch 6, **dadurch gekennzeichnet, dass** die Membran (23) oberseitig mit einem umlaufenden Ringsteg (29) versehen ist.

8. Einkaufswagen nach einem der Ansprüche 2 bis 7, wenn abhängig von Anspruch 2, **dadurch gekennzeichnet, dass** die Schnittstelle (43), eine Auswerteschaltung (41) des Messumformers (27, 41) und/oder ein elektrischer Energiespeicher (45) für den Messumformer (27, 41; 47) in dem Inneren des Krafteinleitungsrohrs (21) angeordnet ist bzw. sind.

9. Einkaufswagen nach einem der Ansprüche 1 bis 8, **dadurch gekennzeichnet, dass** der Federkörper (17) monolithisch ausgebildet ist.

10. Einkaufswagen nach einem der Ansprüche 1 bis 9, **dadurch gekennzeichnet, dass** die Schnittstellen im Rahmen über eine Verkabelung mit einer Recheneinheit verbunden sind, um aus den drei oder vier Ausgangssignalen der Messumformer ein Gesamtgewicht des Einkaufswagens und/oder ein Gesamtgewicht der im Korb abgelegten Waren zu bestimmen.

11. Einkaufswagen nach einem der Ansprüche 1 bis 10, **dadurch gekennzeichnet, dass** der Einkaufswagen eine Kommunikationseinheit umfasst, um das Gewicht der im Korb abgelegten Waren an eine Empfängereinheit zu übermitteln.

12. System zum Selbst-Checkout von Waren in einem Ladengeschäft, insbesondere in einem Supermarkt, wobei das System eine Vielzahl von Einkaufswagen (11) nach einem der Ansprüche 1 bis 11 umfasst und mindestens eine Checkout-Vorrichtung, die eine Empfängereinheit umfasst, die dazu ausgebildet ist, Gewichtsdaten von einer Kommunikationseinheit eines Einkaufswagens zu empfangen, wobei die Checkout-Vorrichtung die empfangenen Gewichtsdaten mit erwarteten Gewichtsdaten vergleicht und ein Freigabe Signal ausgibt, falls die empfangenen Gewichtsdaten und die erwarteten Gewichtsdaten übereinstimmen, und wobei die Checkout-Vorrichtung ein Nichtfreigabe Signal ausgibt, falls die empfangenen Gewichtsdaten und die erwarteten Gewichtsdaten nicht übereinstimmen.

13. System zum Selbst-Checkout von Waren in einem Ladengeschäft nach Anspruch 12, **dadurch gekennzeichnet, dass** das System mobile Scanner zum Scannen eines maschinenlesbaren Codes umfasst, wobei der Scanner nach dem Scannen eines maschinenlesbaren Codes den Code an eine zentrale Stelle übermittelt und die zentrale Stelle ein erwartetes Gesamtgewicht von Waren, die in einem Zeitraum gescannt wurden, aufgrund der gescannten maschinenlesbaren Codes ermittelt, und wobei die zentrale Stelle das erwartete Gesamtgewicht an die Checkout-Vorrichtung übermittelt.

14. System zum Selbst-Checkout von Waren in einem Ladengeschäft nach Anspruch 13, **dadurch gekennzeichnet, dass** die zentrale Stelle jede Gewichtsänderung, die einem maschinenlesbaren Code zuordenbar ist, mit einem Gewicht von einer zu dem maschinenlesbaren Code passenden Ware vergleicht und bei einer Abweichung, die größer als ein Grenzwert ist, eine Fehlermeldung erzeugt.

15. System zum Selbst-Checkout von Waren in einem Ladengeschäft nach Anspruch 14, **dadurch gekennzeichnet, dass** die Zentrale Stelle die Fehlfunktion eines Einkaufswagens ermittelt, falls bei einem Großteil der eingescannten Waren eine Fehlermeldung erzeugt wird.

## Claims

1. Shopping cart (11) for the self checkout of items in a store, in particular in a supermarket, with a basket (18) for receiving the items and a frame (14), which carries the basket (18), wherein the frame (14) is supported on three or four wheels (16), wherein at least one wheel (16) is connected by way of a retaining plate (9) to a swivel bearing (15), which mounts the wheel (16) rotatably in the horizontal, wherein a weighing cell with a force-introducing element is arranged in each case between the frame (14) and a wheel (16), wherein the weighing cell comprises a measuring transducer (27, 41; 47) for generating an output signal corresponding to a weight acting on the force-introducing element (21), **characterized in that** the weighing cell (13) comprises a spring body (17) with an outer bearing ring (19), an inner force-introducing element (21) and a deforming portion (23), by way of which the bearing ring (19) and the force-introducing element (21) are securely connected to one another, and wherein the frame (14) is supported on the force-introducing elements (21) of the weighing cells (13), and **in that** the swivel bearing (15) or the retaining plate (9) of the wheels (16) is mechanically securely connected to the bearing rings (19), and **in that** the measuring transducer (27, 41; 47) is electrically connected to an interface (43), which is designed to output the output signal generated by the measuring transducer (27, 41; 47) by way of the force-introducing element to an interface in the frame (14) .

2. Shopping cart according to Claim 1, **characterized in that** the bearing ring lies in a horizontal plane and the force-introducing element is formed as a vertically oriented force-introducing tube, and **in that** the frame transmits the weight acting in each case on a wheel to the respective force-introducing tube.

3. Shopping cart according to Claim 1 or 2, **characterized in that** the measuring transducer (27, 41) comprises multiple strain gauges (27), which are arranged on the deforming portion (23), are electrically interconnected to form a Wheatstone measuring bridge or as part thereof, for detecting an extending and/or compressing deformation of the spring body (17) and comprises an evaluation circuit (41), which is electrically connected to the strain gauges (27) and is designed to generate the output signal, wherein the evaluation circuit (41) is preferably provided on the force-introducing element (21) .

4. Shopping cart according to Claim 3, **characterized in that** the multiple strain gauges (27) are arranged on the underside of the deforming portion (23).

5. Shopping cart according to one of Claims 1 to 4, **characterized in that** the measuring transducer (47) comprises a Hall sensor (47), which is designed to interact with a magnet (49), wherein the Hall sensor (47) is preferably provided on the force-introducing element (21).

6. Shopping cart according to one of Claims 1 to 5, **characterized in that** the ring-shaped deforming portion (23) is designed as a membrane (23) in the form of a circular ring.

7. Shopping cart according to Claim 6, **characterized in that** the membrane (23) is provided on the upper side with a peripheral annular web (29).

8. Shopping cart according to one of Claims 2 to 7, if dependent on Claim 2, **characterized in that** the interface (43), an evaluation circuit (41) of the measuring transducer (27, 41) and/or an electrical energy store (45) for the measuring transducer (27, 41; 47) is or are arranged inside the force-introducing tube (21).

9. Shopping cart according to one of Claims 1 to 8, **characterized in that** the spring body (17) is monolithically formed.

10. Shopping cart according to one of Claims 1 to 9, **characterized in that** the interfaces in the frame are connected by way of cabling to a computing unit, in order to determine from the three or four output signals of the measuring transducers a total weight of the shopping cart and/or a total weight of the items placed in the basket.

11. Shopping cart according to one of Claims 1 to 10, **characterized in that** the shopping cart comprises a communication unit, in order to transmit the weight of the items placed in the basket to a receiver unit.

12. System for the self checkout of items in a store, in particular in a supermarket, wherein the system comprises a multiplicity of shopping carts (11) according to one of Claims 1 to 11, and at least one checkout device, which comprises a receiver unit, which is designed to receive weight data from a communication unit of a shopping cart, wherein the checkout device compares the received weight data with expected weight data and outputs an enabling signal if the received weight data and the expected weight data coincide, and wherein the checkout device outputs a non-enabling signal if the received weight data and the expected weight data do not coincide.

13. System for the self checkout of items in a store according to Claim 12, **characterized in that** the system comprises mobile scanners for scanning a machine-readable code, wherein, after scanning a machine-readable code, the scanner transmits the code to a central location and the central location determines on the basis of the scanned machine-readable code an expected total weight of items that have been scanned over a period of time, and wherein the central location transmits the expected total weight to the checkout device.

14. System for the self checkout of items in a store according to Claim 13, **characterized in that** the central location compares each change in weight that can be assigned to a machine-readable code with a weight of an item matching the machine-readable code and, if there is a deviation which is greater than a limit value, generates an error message.

15. System for the self checkout of items in a store according to Claim 14, **characterized in that** the central location determines that a shopping cart is malfunctioning if an error message is generated in the case of a large number of the items scanned in.

## Revendications

1. Chariot d'achat (11) destiné au passage en caisse en libre-service de marchandises dans un magasin de détail, notamment dans un supermarché, comprenant un panier (18) destiné à accueillir des marchandises et un cadre (14), qui supporte le panier (18), le cadre (14) prenant appui sur trois ou quatre roues (16), au moins une roue (16) étant reliée par le biais d'une tôle de maintien (9) à un palier de pivotement (15), lequel supporte la roue (16) à rotation dans l'horizontale, une cellule de pesée pourvue d'un élément de transmission de force étant respectivement disposée entre le cadre (14) et la roue (16), la cellule de pesée comportant un transducteur de mesure (27, 41 ; 47) destiné à générer un signal de sortie correspondant à un poids agissant sur l'élément de transmission de force (21), **caractérisé en ce que** la cellule de pesée (13) comporte un corps de ressort (17) pourvu d'une bague de palier externe (19), d'un élément de transmission de force interne (21) et d'une portion de déformation (23) de forme annulaire, par le biais de laquelle la bague de palier (19) et l'élément de transmission de force (21) sont reliés à demeure l'un à l'autre, et le cadre (14) prenant appui sur les éléments de transmission de force (21) des cellules de pesée (13), et **en ce que** le palier de pivotement (15) ou la tôle de maintien (9) des roues (16) sont reliés mécaniquement à demeure aux bagues de palier (19), et **en ce que** le transducteur de mesure (27, 41 ; 47) est relié électriquement à une interface (43), laquelle est configurée pour délivrer le signal de sortie généré par le transducteur de mesure (27, 41 ; 47) à une interface dans le cadre (14) par le biais de l'élément de transmission de force.

2. Chariot d'achat selon la revendication 1, **caractérisé en ce que** la bague de palier repose dans un plan horizontal et l'élément de transmission de force est réalisé sous la forme d'un tube de transmission de force orienté verticalement, et **en ce que** le cadre transmet sur l'élément de transmission de force respectif le poids qui agit respectivement au niveau d'une roue.

3. Chariot d'achat selon la revendication 1 ou 2, **caractérisé en ce que** le transducteur de mesure (27, 41) comporte de multiples jauges de contrainte (27) disposées sur la portion de déformation (23) et connectées électriquement en un pont de mesure de Wheatstone ou une partie de celui-ci pour la détection d'une déformation d'allongement et/ou de compression du corps de ressort (17) ainsi qu'un circuit d'interprétation (41) relié électriquement aux jauges de contrainte (27), lequel est configuré pour générer le signal de sortie, le circuit d'interprétation (41) se trouvant de préférence au niveau de l'élément de transmission de force (21).

4. Chariot d'achat selon la revendication 3, **caractérisé en ce que** les multiples jauges de contrainte (27) sont disposées du côté inférieur sur la portion de déformation (23).

5. Chariot d'achat selon l'une des revendications 1 à 4, **caractérisé en ce que** le transducteur de mesure (47) comporte un capteur à effet Hall (47), lequel est configuré pour coopérer avec un aimant (49), le capteur à effet Hall (47) se trouvant de préférence au niveau de l'élément de transmission de force (21).

6. Chariot d'achat selon l'une des revendications 1 à 5, **caractérisé en ce que** la portion de déformation (23) de forme annulaire est réalisée sous la forme d'une membrane (23) de forme torique.

7. Chariot d'achat selon la revendication 6, **caractérisé en ce que** la membrane (23) est pourvue du côté supérieur d'une nervure annulaire (29) circonférentielle.

8. Chariot d'achat selon l'une des revendications 2 à 7, lorsqu'elle dépend de la revendication 2, **caractérisé en ce que** l'interface (43), un circuit d'interprétation (41) du transducteur de mesure (27, 41) et/ou un accumulateur d'énergie électrique (45) pour le transducteur de mesure (27, 41 ; 47) est ou sont disposé(s) à l'intérieur du tube de transmission de force (21) .

9. Chariot d'achat selon l'une des revendications 1 à 8, **caractérisé en ce que** le corps de ressort (17) est de configuration monolithique.

10. Chariot d'achat selon l'une des revendications 1 à 9, **caractérisé en ce que** les interfaces dans le cadre sont reliées à une unité de calcul par le biais d'un câblage afin de déterminer, à partir des trois ou quatre signaux de sortie des transducteurs de mesure, un poids total du chariot d'achat et/ou un poids total des marchandises déposées dans le panier.

11. Chariot d'achat selon l'une des revendications 1 à 10, **caractérisé en ce que** le chariot d'achat comporte une unité de communication afin de communiquer le poids des marchandises déposées dans le panier à une unité réceptrice.

12. Système de passage en caisse en libre-service de marchandises dans un magasin de détail, notamment dans un supermarché, le système comprenant une pluralité de chariots d'achat (11) selon l'une des revendications 1 à 11 et au moins un arrangement de passage en caisse, lequel comporte une unité réceptrice qui est configurée pour recevoir des données de poids de la part d'une unité de communication d'un chariot d'achat, l'arrangement de passage en caisse comparant les données de poids reçues avec des données de poids attendues et délivrant en sortie un signal de validation dans le cas où les données de poids reçues et les données de poids attendues coïncident, et l'arrangement de passage en caisse délivrant en sortie un signal de non-validation dans le cas où les données de poids reçues et les données de poids attendues ne coïncident pas.

13. Système de passage en caisse en libre-service de marchandises dans un magasin de détail selon la revendication 12, **caractérisé en ce que** le système comporte un lecteur par balayage mobile servant à lire par balayage un code lisible par machine, le lecteur par balayage communiquant le code à un poste central après la lecture par balayage d'un code lisible par machine et le poste central déterminant un poids total attendu des marchandises, qui ont été lues par balayage dans une période donnée, sur la base du code lisible par machine lu par balayage, et le poste central communiquant le poids total attendu à l'arrangement de passage en caisse.

14. Système de passage en caisse en libre-service de marchandises dans un magasin de détail selon la revendication 13, **caractérisé en ce que** le poste central compare chaque changement de poids qui peut être associé à un code lisible par machine à un poids d'une marchandise assortie au code lisible par machine et génère un message d'erreur dans le cas d'un écart qui est supérieur à une valeur limite.

15. Système de passage en caisse en libre-service de marchandises dans un magasin de détail selon la revendication 14, **caractérisé en ce que** le poste central détermine le défaut de fonctionnement d'un chariot d'achat dans le cas où un message d'erreur est généré avec une grande partie des marchandises lues par balayage.
